# EUROPEAN PATENT SPECIFICATION

(11) **EP 2 919 442 B1**
(45) Date of publication and mention of the grant of the patent: **26.02.2020**
(21) Application number: 15158852.2
(22) Date of filing: 12.03.2015
(51) Int. Cl.: H04L 29/08, H04W 4/02, G06Q 30/02

(54) **USING AUDIO INTERVENTION FOR CREATING CONTEXT AWARENESS**
VERWENDUNG AUDIOINTERVENTION ZUR ERZEUGUNG VON KONTEXTBEWUSSTSEIN
UTILISATION D'UNE INTERVENTION AUDIO POUR ATTIRER L'ATTENTION SUR UN CONTEXTE

(30) Priority: 13.03.2014 IL 23152614
(43) Date of publication of application: 16.09.2015
(73) Proprietor: Deutsche Telekom AG, 53113 Bonn (DE)
(72) Inventor: Chizi, Barak, Ashkelon (IL); Mimran, Dudu, Tel Aviv (IL); Elovici, Yuval, 79864 Arugot (IL); Shapira, Bracha, Beer Sheva (IL)
(74) Representative: Perani & Partners S.p.A.

(56) References cited:
- US-A1- 2004 128 359
- US-A1- 2008 133 336
- US-A1- 2010 004 005

## Description

### Field of the Invention

The present invention relates to the field of monitoring systems. More particularly, the invention relates to a system and method for providing context based alerts in the form of sounds to users, via their mobile devices.

### Background of the Invention

Many users of mobile phones (or other mobile devices with a connection to cellular networks) use them for listening to content, such as music in the form of audio files stored on the mobile phone, or listening to streamed audio broadcasted from radio stations via the cellular network. In order to isolate environmental noises, most of the users use large earphones, which cover the entire auricle of each ear. This may cause safety problems, since the user cannot hear sounds that should increase his level of caution, such as approaching vehicles (if he walks on the sidewalk or an approaching dog which may attack him while jogging in a park).

Some of the existing earphones have a built in microphone, which can be activated when the user wishes to be exposed to environmental noise by simultaneously disabling the audio channel of the cellphone. However, this requires the user's intention and active operation, which are not always possible while he is walking or jogging.

In addition, while being audibly isolated from the environment, the user sometimes misses audible inputs from the environment, which may be of interest to his current status. For example, if he is hungry and likes Chinese food, he may wish to know that he is coming close to a Chinese restaurant, but if the restaurant is located behind the corner, he cannot see it. In addition, one of his friends or people that he may wish to meet may be in his close vicinity (e.g., inside a store nearby), but he may not be visible to him, since the user is walking in the street.

It is therefore desired to provide a sound alert to the user, that increases his awareness regarding risks or entities of interest in his vicinity.

It is an object of the present invention to provide a method and system for providing sound alerts to a user that increase his awareness regarding risks or entities of interest in his vicinity.

It is another additional object of the present invention to provide a method and system for providing sound recommendations to a user in the form sound alerts that increase his awareness regarding points and services of interest in his vicinity, which are relevant to his location and context.

Other objects and advantages of the invention will become apparent as the description proceeds.

US 2010/004005 discloses a mobile computing device which comprises a user input device, an output device, a memory configured to store data and a processing circuit. The processing circuit is configured to receive user input from the user input device indicative of a request to associate the stored data with a second mobile computing device, to receive an indication that the second mobile computing device is proximate to the mobile computing device, and to provide a notification to the user via the output device based on the indication.

US 2008/0133336 discloses a location sharing network manager process, which is executed on a server coupled to a plurality of mobile communication devices over a wireless network. Each mobile device is a location-aware mobile communication device. The process determines the geographic location of a mobile communication device operated by a user within an area, displays a map representation of the area around the mobile communication device on a graphical user interface of the mobile communication device, and superimposes on the map the respective locations of one or more other trusted users of mobile communication devices coupled to the mobile communication device over the network. An advertising platform manager provides tools for an advertiser to create and transmit relevant ad messages to a user based on specific location, time, and profile data of the user. Such location-based ad serving allows for the creation of ads that directly leverage a key component of the user's interaction with the mobile device in that messages can be tied directly to the location display of a product or service offered by the advertiser. The ad messages can be provided in the form of text or graphic messages, logos, display branding. Information related to time and location-sensitive promotional events can also be effectively broadcast to users in the form of alerts or coupons that encourage user to visit a location that may be near the user.

### Summary of the Invention

The present invention is directed to a method for providing sound alerts to a user to increase his awareness regarding entities of interest in his vicinity, comprising the steps of:
a) registering said user at a website as a subscriber;
b) recording and uploading a user profile and one or more first sound alerts for said user to said website;
c) uploading a list of other users associated to said user;
d) installing a mobile application on a mobile device of said user, said mobile application being adapted to:
   d.1) detect a presence of associated users from said list, in a predetermined vicinity of said user's location;
   d.2) upload one or more sound alerts for said user to said website;
   d.3) update statuses of said user, each of which corresponds to one of the one or more first or second sound alerts;
   d.4) select a default sound alert for said user out of the one or more first or second sound alerts; and
   d.5) gain access to a message box of said user or to messages destined to said user and cause the website to perform keyword analysis with respect to the accessed messages in order to obtain said user's current status;
e) analyzing each sound alert out of the one or more first or second sound alerts according to predetermined criteria, to verify that it does not contain any banned words or content and granting a permit to each examined sound alert that met said criteria;
f) storing the sound alert that met said criteria in a database, along with a right association to said user and his status;
g) continuously tracking the location and status of each user and checking whether associated users from said list are within the predetermined vicinity of said user's location, such that they may be relevant to said user's current location and context; and
h) sending a signal to the mobile application on the mobile device to retrieve a relevant sound alert and to play it via said user's earphones or via said user's loudspeaker, depending of the status of the mobile device.

In one aspect, the accessed messages are those messages that are relevant to the user's current location and status.

In one aspect, the retrieved relevant sound alert is a sound that is transmitted in real time from an entity of interest to the mobile device.

In one aspect, the retrieved relevant sound alert relates to an entity of interest which may be a friend being another subscriber user, a point of sale or a service provider.

In one aspect, the method further comprises the step of providing the user with a recommendation regarding the entity of interest which is relevant to the user's current location and status by transmitting the sound alert in real time from the entity of interest to the mobile device.

In one aspect, the recommendation is provided by performing the following steps:
a) collecting data representing a behavioral pattern of the user from one or more sensors related to the mobile device;
b) using said collected data to generate a vector of contexts; and
c) generating the recommendation based on a learning mechanism that adjusts the recommendation in response to receiving feedback from the user.

In one aspect, the generated recommendation is an audio stream from which audio hazards have been filtered.

In one aspect, the one or more sensors are selected from the group consisting of orientation sensors, movement sensors, acceleration sensors, location sensors, battery usage sensors, application usage sensor, call records and temperature sensors.

In one aspect, the method further comprises the step of changing the default sound alert by selecting another sound alert for said user out of the one or more first or second sound alerts.

In one aspect, each sound alert out of the one or more first or second sound alerts is additionally analyzed according to predetermined criteria to verify that it does not exceed a predetermined duration, whereupon the sound alert that met said criteria is stored in the database.

In one aspect, when the user and one of the users from the list of associated users are within the predetermined vicinity of each other, one or both of them will receive a relevant sound alert of the other, even when they cannot see each other.

In one aspect, a plurality of relevant sound alerts are simultaneously transmitted to the user.

In one aspect, the accessed messages are email messages or SMS messages.

### Brief Description of the Drawings

In the drawings:
- Fig. 1 is a schematic illustration of a system for providing sound alerts to a user, in order increase his awareness regarding risks or entities of interest in his vicinity which are relevant to his current location and context, according to one embodiment of the present invention;
- Fig. 2 is a flowchart of the process of providing the relevant sound, according to one embodiment of the present invention;
- Fig. 3 illustrates a scenario when a user walks in the street and gets relevant characteristic sound alerts;
- Fig. 4 illustrates a possible implementation of the website, residing on the management server, according to one embodiment of the present invention.

### Detailed Description of Preferred Embodiments

The system and method of the present invention are capable of providing sound alerts to a user, in order to increase his awareness regarding risks or entities of interest in his vicinity, of which he is unaware. In addition, the proposed method and system may provide recommendations to a user in the form sound alerts that increase his awareness of points and services of interest in his vicinity, which are relevant to his current location and context.

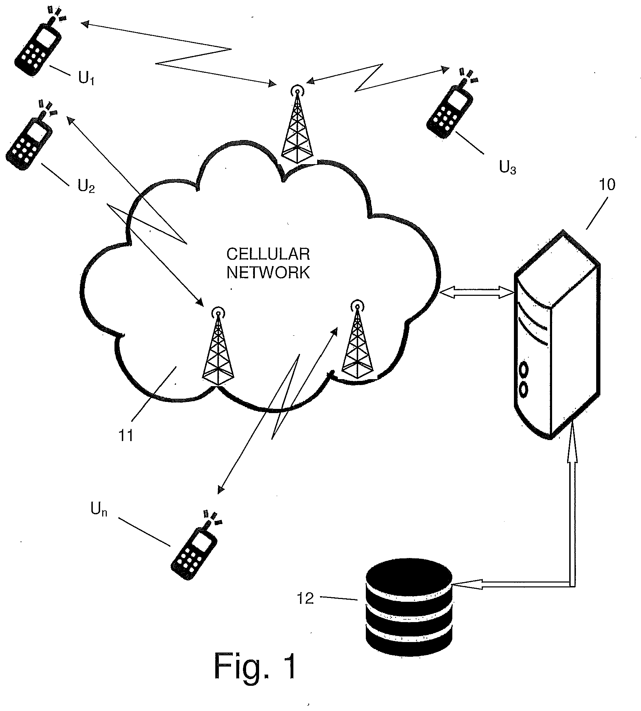

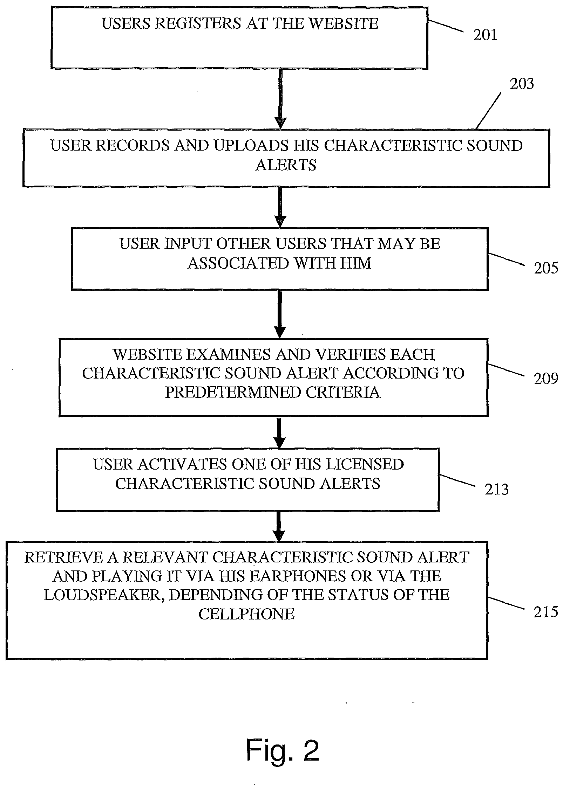

The system 100 illustrated in Fig.1 of the present invention comprises a management server 10 (may be a website that resides on the management server 10 or on another remote location) which is linked to a cellular network 11 that serves a plurality of users (subscribers) U1,....,Un each of which having a mobile device such as a cellphone, and to a database 12 that contains pre-recorded characteristic sounds that are associated with users, such that each user has at least one characteristic sound. Each user that wishes to be a subscriber of the service that provides sound alerts to him, will install a mobile application, which will be used to connect him to the managing server 10 and will generate the sound alerts that will be relevant to him, in response to a command from the managing server. The process of providing the relevant sound alerts will be implemented according to the following steps, which are described in the flowchart of Fig. 2.

At the first step 201, each user will be registered at the website 10 as a subscriber. At the next step 203, the user will record and upload his characteristic sound alerts to the website 10, along with his profile. At the next step 205, the user will be asked to input his friends or other users that may be associated to him, such as restaurants that he likes, shops and other service providers of interest. At least some of this data may be taken from the social network he uses (e.g., Facebook) or from other applications (such as WhatsApp).

The user will then install a dedicated application on his cellphone, which will be adapted to:
- detect the presence of other subscribed users which may be associated with that user, such as friends, relatives points of sale and other services which may be relevant to that user, in a predetermined vicinity of his location;
- upload one or more characteristic sound alerts for that user;
- update several statuses, each of which corresponds to a characteristic sound alert - for example, please do not disturb, I am busy, I am in a bad mood etc.;
- activate an initial characteristic sound alert for that user;
- activate another selected characteristic sound alert for that user;
- get access to his email and message box (SMS or the like), to get data about his current context (i.e., his current location and movements, time, is he busy or available, is he driving, is he at work or at home etc.), according to keyword analysis that will be performed by the server 10.

At the next step 209, the website 10 will analyze and examine each characteristic sound alert (according to predetermined criteria) and verify that it is appropriate (i.e., does not contain any banned words or content) and does not exceed a predetermined duration. The website 10 will then grant a permit (a kind of license) to each examined characteristic sound alert that met the criteria and store in the database 12, along with the right association to that user and his status (which may be his current mood, being busy or available, his will to interact with other people, etc.). For example, when he is in a bad mood, the characteristic sound alert may be a sad melody.

It should be indicated that a user may be a private person or a business or a service provider. In case of a business like a Chinese restaurant, the characteristic sound alert may be a Chinese melody. According to another example, if the subscribed user is a transportation company, such as a bus service, there will be a sound of a bus that is played for several seconds. Other businesses may upload a known jingle that is associated with their service.

At the next step 213 the management server 10 will use the mobile application (which is in continuous communication with the management server 10), and will ask the user to activate one of his licensed characteristic sound alerts (stored in the database 12), as an initial alert or a default alert. The user will be able to activate another characteristic sound alert from the database 10, whenever he likes using the mobile application as a user interface.

At the next step 215 the management server 10 will use a dedicated management software to continuously track the location and status of each user and check whether one or more of his friends, other users that may be associated to him, or points of interest are within a predetermined range, such that they may be relevant to his current context (i.e., his location, status, prediction of his next location etc.). Whenever management software will identify a state in which there is a characteristic sound alert that is currently relevant to the user, the management server will send a signal to the mobile application on his cellphone to retrieve the relevant characteristic sound alert and to play it via his earphones or via the loudspeaker, depending of the status of the cellphone (which is also identified by the mobile application).

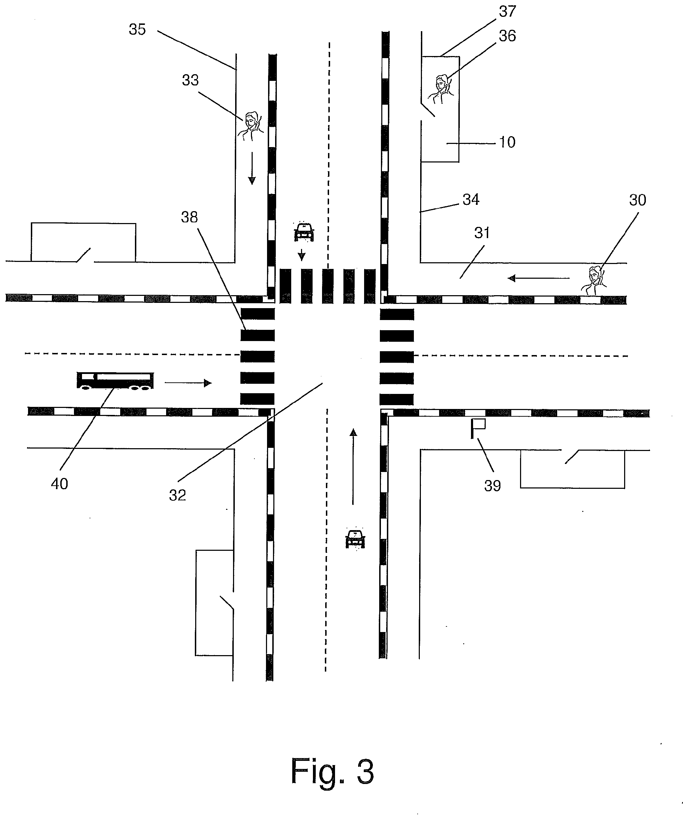

Fig. 3 illustrates a scenario when a user walks in the street and gets relevant characteristic sound alerts. In this example, the user 30 is walking in the street on a sidewalk 31 toward a junction 32. One of his friends 33 (another subscriber user) is walking towards the same junction in another street, so both of them are within the predetermined range (e.g., 50-100 m). The system 100 will identify that both of them are in range (close vicinity) and will check the status of each one of them. If the status allows a connection, one or both of them will get the activated characteristic sound alert of the other. This way, they will be able to meet each other even though at the moment of getting the characteristic sound alert by the mobile application, they cannot see each other, as they are hidden from each other by the buildings 24 and 35. In the same scenario, another user 36 which is a friend of user 33, is inside a Chinese restaurant 37, which is also in range. Even though users 33 and 36 are close, they cannot see each other. However, the mobile application will play the characteristic sound alert of each one to the other, so they will be able to meet. On the other hand, if the status of user 36 is not appropriate for meeting, a different characteristic sound alert (bad mood sound) will be activated by user 36, so even though they are in range user 33 will know that user 36 does not want to meet at moment.

Actually, for any business (publisher) which is a subscribed user, the website 10 will use his characteristic sound alert as a commercial identifier.

For example, if user 30 receives an SMS from his wife to bring take away Chinese food, he may get the characteristic sound alert of Chinese restaurant 37, along with directions how to get there on the display of his mobile device. According to another example, if user 33 is walking or jogging with earphones that isolate him from wishes to cross the street via crosswalk 38, to get a bus, he may receive a characteristic sound of the bus service indicating that there is a bus-stop 39 nearby with directions regarding its location on his cellphone's display. When he gets close to crosswalk 38, he cannot see that the bus 40 is approaching and he also cannot hear it. In this case, if any bus is equipped with a mobile device that provide data regarding its location and movement, the mobile application identifies that user 33 uses his earphones and transmits this information to website 10, which can identify that it is not safe for user 33 (which is approaching crosswalk 38) to cross the street, as the bus 40 is approaching. As a result, when user 33 will approach crosswalk 38, he will get an alert in the form of a typical bus noise to be careful before crossing the street. Assuming that each driver has a mobile device, it is possible to provide alerts to other users with earphones to be careful from approaching traffic, as well as alerts to drivers regarding approaching pedestrians.

The system of the present invention is also able to provide recommendations to subscribed users about services or businesses of interest in their close vicinity, which are relevant to their current context. For example, if a user is on his way home and receives an SMS from home to bring beverages on his way, this context may be identified by website 10, which will send him a recommendation about grocery stores or a supermarket on his way, in the form of the a relevant characteristic sound alert (e.g., a jingle) of these points of sale. According to another example, if a user gets a flying ticket via mail, he may get a relevant characteristic sound alert when he passes near a store that sells suitcases.

According to another example, if the system 100 identifies that the user is in a lunch break and his profile indicates that he likes Italian food, as soon as he will be close to an Italian restaurant, he will receive a relevant characteristic sound alert as a recommendation, in the form of typical Italian melody.

According to another embodiment, the characteristic sound alert may be sounds that are transmitted in real time from the business, rather than a recorded characteristic sound alert. For example, if the place of interest is a pub or a night club, the pub owner may set a mobile device with the mobile application as a mobile microphone, which may use the mobile application to transmit real sounds from the pub (e.g., music) in real time to the website 10, and from there to users with relevant context.

According to another embodiment, it will be possible to simultaneously transmit a plurality of relevant characteristic sound alerts to a user, e.g., of users that attend a conference. In this case, since the plurality of relevant characteristic sound alerts is isolated from environmental noise, the user will be able to select a characteristic sound alert which is interesting for him. He may also receive a photograph of each user that is associated with this plurality, to identify them visually, as well.

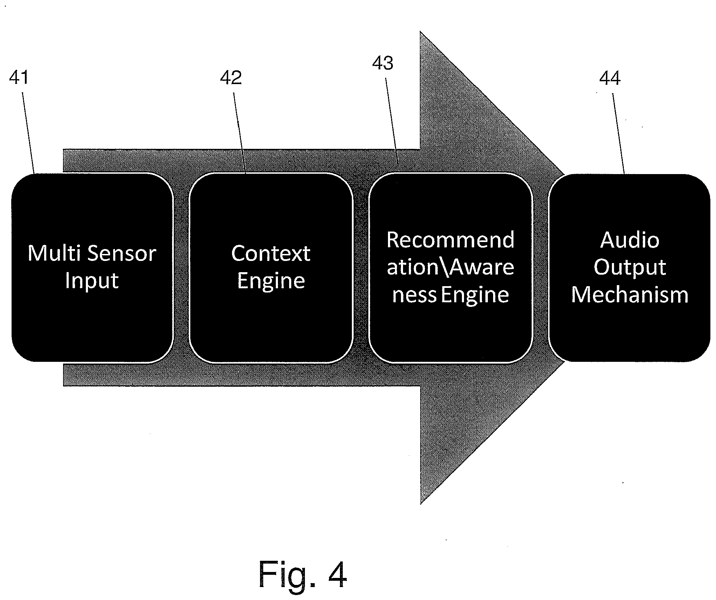

Fig. 4 illustrates a possible implementation of the website 10, residing on the management server. A Multi Sensor Input collection module 41 collects data from various kinds of sensors, which are a part of the mobile platform, and may include for example, orientation sensors, movement sensors acceleration sensors, location, battery usage, applications that are used, call records, temperature, etc. The data collected from the sensors reflects the behavioral pattern of the user which owns the mobile phone. A Context Engine 42 uses the collected data of the sensors and generates a vector of contexts, which defines the behavioral of the users. The consolidation of context is based on a learning mechanism that deduces the different contexts, based on the records which describe the usage pattern of the mobile device. These contexts can be used for several of applications of recommendations and providing hazard alerts. For example, knowing the context of shopping can yield an effective recommendation of a shop located nearby.

A Recommendation/Awareness Engine 43 uses the contexts provided by Context Engine 42 to generate a recommendations or alerts, based on a learning mechanism that tunes the recommendation/alert upon receiving feedback from the user. This way, the platform can personalize the recommendation/alert (timing and kind) for each user.

An audio Output Module 44 generates a short audio stream which reflects recommendation out of a rich behavioral, location and sentimental data In addition, the proposed platform filters out the important audio hazards while enabling the user enjoying separated audio experience. This mechanism provides online recommendation and awareness outputs. While some embodiments of the invention have been described by way of illustration, it will be apparent that the invention can be carried out with many modifications, variations and adaptations, and with the use of numerous equivalents or alternative solutions that are within the scope of persons skilled in the art, without exceeding the scope of the claims.

## Claims

1. A method for providing sound alerts to a user (30) to increase his awareness regarding entities of interest (37) in his vicinity, comprising the steps of:
a) registering (201) said user (30) at a website (10) as a subscriber;
b) recording and uploading (203) a user profile and one or more first sound alerts for said user to said website (10);
c) uploading (205) a list of other users (33) associated to said user;
d) installing a mobile application on a mobile device (Uₙ) of said user, said mobile application being adapted to:
d.1) detect a presence of associated users from said list (36) in a predetermined vicinity of said user's location;
d.2) upload one or more second sound alerts for said user to said website;
d.3) update statuses of said user, each of which corresponds to one of the one or more first or second sound alerts;
d.4) select a default sound alert for said user out of the one or more first or second sound alerts (213); and
d.5) gain access to a message box of said user or to messages destined to said user and cause the website to perform keyword analysis with respect to the accessed messages in order to obtain said user's current status;
e) analyzing each sound alert out of the one or more first or second sound alerts according to predetermined criteria (209), to verify that it does not contain any banned words or content and granting a permit to each examined sound alert that met said criteria;
f) storing the sound alert that met said criteria in a database (12), along with a right association to said user and his status;
g) continuously tracking the location and status of each user and checking whether associated users from said list are within the predetermined vicinity of said user's location, such that they may be relevant to said user's current location and status; and
h) sending a signal to the mobile application on the mobile device to retrieve a relevant sound alert and to play it via said user's earphones or via said user's loudspeaker, depending of the status of the mobile device (215).

2. The method according to claim 1, wherein the accessed messages are those messages that are relevant to the user's current location and status.

3. The method according to claim 1, wherein the retrieved relevant sound alert relates to an entity of interest (37) which is a friend being another subscriber user, a point of sale or a service provider.

4. The method according to claim 1, wherein the retrieved relevant sound alert is a sound that is transmitted in real time from an entity of interest (37) to the mobile device (Uₙ).

5. The method according to claim 4, further comprising the step of providing the user (30) with a recommendation regarding the entity of interest (37) which is relevant to the user's current location and status by transmitting the sound alert in real time from the entity of interest to the mobile device (Uₙ).

6. The method according to claim 5, wherein the recommendation is provided by performing the following steps:
a) collecting data representing a behavioral pattern of the user (30) from one or more sensors related to the mobile device (Uₙ);
b) using said collected data to generate a vector of contexts; and
c) generating the recommendation based on a learning mechanism that adjusts the recommendation in response to receiving feedback from the user.

7. The method according to claim 6, wherein the generated recommendation is an audio stream from which audio hazards have been filtered.

8. The method according to claim 6, wherein the one or more sensors are selected from the group consisting of orientation sensors, movement sensors, acceleration sensors, location sensors, battery usage sensors, application usage sensor, call records and temperature sensors.

9. The method according to claim 1, further comprising the step of changing the default sound alert by selecting another sound alert for said user out of the one or more first or second sound alerts.

10. The method according to claim 1, wherein each sound alert out of the one or more first or second sound alerts is additionally analyzed according to predetermined criteria (209) to verify that it does not exceed a predetermined duration, whereupon the sound alert that met said criteria is stored in the database (12).

11. The method according to claim 1, wherein when the user and one of the users from the list of associated users are within the predetermined vicinity of each other, one or both of them will receive a relevant sound alert of the other, even when they cannot see each other.

12. The method according to claim 1, wherein a plurality of relevant sound alerts are simultaneously transmitted to the user.

13. The method according to claim 1, wherein the accessed messages are email messages or SMS messages.

## Patentansprüche

1. Eine Methode zur Ausgabe von akustischen Warnungen an einen Benutzer (30), um seine Aufmerksamkeit in Bezug auf interessante Entitäten (37) in seiner Nähe zu steigern, umfassend folgende Schritte:
a) Anmelden (201) des Benutzers (30) an einer Webseite (10) als Abonnent;
b) Aufnehmen und Hochladen (203) eines Benutzerprofils und einer oder mehrerer erster akustischer Warnungen für diesen Benutzer auf die Webseite (10);
c) Hochladen (205) einer Liste von anderen diesem Benutzer zugeordneten Benutzern (33);
d) Installieren einer mobilen Anwendung auf einem mobilen Gerät (Uₙ) des Benutzers, wobei diese mobile Anwendung darauf abgestimmt ist:
d.1) eine Anwesenheit von dieser Liste (36) zugeordneten Benutzern in einer vorgegebenen Nähe des Standortes des Benutzers zu erfassen;
d.2) eine oder mehrere von zweiten akustischen Warnungen für diesen Benutzer auf die Webseite hochzuladen;
d.3) die Benutzerstatus, die jeweils einer der einen oder mehreren ersten oder zweiten akustischen Warnungen entsprechen zu aktualisieren;
d.4) eine akustische Standardwarnung für diesen Benutzer aus der einen oder mehreren ersten oder zweiten akustischen Warnungen (213) auszuwählen; und
d.5) Zugriff auf eine Meldungsbox des Benutzers oder auf für den Benutzer bestimmte Meldungen zu erhalten und bewirken, dass die Webseite eine Keywordanalyse in Bezug auf die aufgerufenen Meldungen durchführt, um den aktuellen Status des Benutzers zu ermitteln;
e) jede akustische Warnung aus der einen oder mehreren ersten oder zweiten akustischen Warnungen nach vorgegebenen Kriterien (209) zu analysieren, um festzustellen, dass darin keine verbotenen Wörter oder Inhalte enthalten sind und eine Genehmigung für jede überprüfte, akustische Warnung zu erteilen, die diese Kriterien erfüllt;
f) die diese Kriterien erfüllende akustische Warnung zusammen mit der korrekten Zuordnung des Benutzers und dessen Status in einer Datenbank (12) abzuspeichern;
g) den Standort und Status jeden Benutzers kontinuierlich nachzuverfolgen und zu überprüfen, ob die dieser Liste zugeordneten Benutzer sich innerhalb der vorgegebenen Nähe des Standortes des Benutzers befinden, so dass sie für den Standort und Status des Benutzers relevant sein können; und
h) ein Signal an die mobile Anwendung auf dem mobilen Gerät zu senden, um eine relevante akustische Warnung abzurufen und abhängig vom Status des mobilen Geräts (215) über die Kopfhörer des Benutzers oder über die Lautsprecher des Benutzers abzuspielen.

2. Die Methode nach Anspruch 1, wobei die aufgerufenen Meldungen solche Meldungen sind, die für den aktuellen Standort und Status des Benutzers relevant sind.

3. Die Methode nach Anspruch 1, wobei die abgerufene relevante akustische Warnung eine interessante Entität (37) betrifft, die ein Freund ist, der ein anderer Teilnehmer/Benutzer, ein Point of sales oder einen Anbieter von Diensten ist.

4. Die Methode nach Anspruch 1, wobei die abgerufene relevante akustische Warnung ein Ton ist, der von einer interessanten Entität (37) zum mobilen Gerät (Uₙ) in Echtzeit übertragen wird.

5. Die Methode nach Anspruch 4, ferner umfassend den Schritt dem Benutzer (30) eine Empfehlung in Bezug auf die interessante Entität (37) zu geben, die für den aktuellen Standort und Status des Benutzers relevant ist, indem die akustische Warnung von der interessanten Entität zum mobilen Gerät (Uₙ) in Echtzeit übertragen wird.

6. Die Methode nach Anspruch 5, wobei die Empfehlung durch Ausführung folgender Schritte erstellt wird:
a) Daten, die ein Verhaltensmuster des Benutzers (30) darstellen aus einem oder mehreren mit dem mobilen Gerät (Uₙ) in Verbindung stehenden Sensoren sammeln;
b) Verwendung dieser gesammelten Daten zum Erzeugen eines Kontextvektors; und
c) Erstellen der Empfehlung auf Basis eines Lernmechanismus, der die Empfehlung als Antwort auf den Empfang eines Feedbacks des Benutzers einstellt.

7. Die Methode nach Anspruch 6, wobei die erzeugte Empfehlung ein Audiostrom ist, aus dem Hörgefahren herausgefiltert worden sind.

8. Die Methode nach Anspruch 6, wobei der eine oder die mehreren Sensoren aus der Gruppe bestehend aus Orientierungssensoren, Bewegungssensoren, Beschleunigungssensoren, Ortungssensoren, Akkuverbrauchssensoren, Anwendungsnutzungssensoren, Anrufdatensätzen und Temperatursensoren ausgewählt sind.

9. Die Methode nach Anspruch 1, ferner umfassend den Schritt der Änderung der vorgegebenen akustischen Warnung durch Auswahl einer anderen akustischen Warnung für den Benutzer aus der einen oder mehreren ersten oder zweiten akustischen Warnungen.

10. Die Methode nach Anspruch 1, wobei jede akustische Warnung aus der einen oder mehreren ersten oder zweiten akustischen Warnungen zusätzlich nach vorgegebenen Kriterien (209) untersucht wird, um zu überprüfen, dass sie eine vorbestimmte Zeitdauer nicht überschreitet, woraufhin die diese Kriterien erfüllende akustische Warnung in der Datenbank (12) gespeichert wird.

11. Die Methode nach Anspruch 1, wobei, wenn der Benutzer und einer der Benutzer aus der Liste der zugehörigen Benutzer sich zueinander innerhalb der vorbestimmten Nähe befinden, wird einer oder beide von Ihnen eine relevante akustische Warnung vom anderen Benutzer erhalten, auch wenn sie sich nicht sehen können.

12. Die Methode nach Anspruch 1, wobei dem Benutzer eine Vielzahl von relevanten akustischen Warnungen gleichzeitig übertragen werden.

13. Die Methode nach Anspruch 1, wobei die aufgerufenen Meldungen Email-Meldungen oder SMS-Meldungen sind.

## Revendications

1. Procédé pour fournir des alertes sonores à un utilisateur (30) pour accroître son attention vis-à-vis d'entités d'intérêt (37) dans son voisinage, comprenant les étapes consistant à :
a) inscrire (201) ledit utilisateur (30) sur un site Web (10) en tant qu'abonné ;
b) enregistrer et téléverser (203) un profil d'utilisateur et une ou plusieurs premières alertes sonores pour ledit utilisateur vers ledit site Web (10) ;
c) téléverser (205) une liste d'autres utilisateurs (33) associés audit utilisateur ;
d) installer une application mobile sur un dispositif mobile (Uₙ) dudit utilisateur, ladite application mobile étant conçue pour :
d.1) détecter une présence d'utilisateurs associés de ladite liste (36) dans un voisinage prédéterminé de la position dudit utilisateur ;
d.2) téléverser une ou plusieurs secondes alertes sonores pour ledit utilisateur vers ledit site Web ;
d.3) mettre à jour des statuts dudit utilisateur, chacun desquels correspond à une alerte parmi lesdites une ou plusieurs premières ou secondes alertes sonores ;
d.4) sélectionner une alerte sonore par défaut pour ledit utilisateur parmi lesdites une ou plusieurs premières ou secondes alertes sonores (213) ; et
d.5) obtenir l'accès à une boîte de messagerie dudit utilisateur ou à des messages destinés audit utilisateur et amener le site Web à réaliser une analyse par mots-clés à l'égard des messages consultés afin d'obtenir le statut actuel dudit utilisateur ;
e) analyser chaque alerte sonore parmi lesdites une ou plusieurs premières ou secondes alertes sonores en fonction de critères prédéterminés (209) pour vérifier qu'elle ne contient aucun mot ou contenu banni, et accorder une autorisation à chaque alerte sonore examinée qui a satisfait lesdits critères ;
f) stocker l'alerte sonore qui a satisfait lesdits critères dans une base de données (12), conjointement avec une association de droits pour ledit utilisateur et son statut ;
g) suivre en continu la position et le statut de chaque utilisateur et vérifier si des utilisateurs associés de ladite liste sont à l'intérieur du voisinage prédéterminé de la position dudit utilisateur, de sorte qu'ils peuvent être pertinents pour la position et le statut actuels dudit utilisateur ; et
h) envoyer un signal à l'application mobile sur le dispositif mobile pour récupérer une alerte sonore pertinente et la jouer par l'intermédiaire des écouteurs dudit utilisateur ou par l'intermédiaire du haut-parleur dudit utilisateur, en fonction de l'état du dispositif mobile (215).

2. Procédé selon la revendication 1, dans lequel les messages consultés sont les messages qui sont pertinents pour la position et le statut actuels dudit utilisateur.

3. Procédé selon la revendication 1, dans lequel l'alerte sonore pertinente récupérée se rapporte à une entité d'intérêt (37) qui est un ami étant un autre utilisateur abonné, un point de vente ou un fournisseur de services.

4. Procédé selon la revendication 1, dans lequel l'alerte sonore pertinente récupérée est un son qui est transmis en temps réel par une entité d'intérêt (37) au dispositif mobile (Uₙ).

5. Procédé selon la revendication 4, comprenant en outre l'étape consistant à fournir à l'utilisateur (30) une recommandation vis-à-vis de l'entité d'intérêt (37) qui est pertinente pour la position et le statut actuels de l'utilisateur par la transmission de l'alerte sonore en temps réel de l'entité d'intérêt au dispositif mobile (Uₙ).

6. Procédé selon la revendication 5, dans lequel la recommandation est fournie par la réalisation des étapes suivantes :
a) collecter des données représentant un modèle comportemental de l'utilisateur (30) à partir d'un ou de plusieurs capteurs se rapportant au dispositif mobile (Uₙ) ;
b) utiliser lesdites données collectées pour générer un vecteur de contextes ; et
c) générer la recommandation sur la base d'un mécanisme d'apprentissage qui ajuste la recommandation en réponse à la réception d'une rétroaction provenant de l'utilisateur.

7. Procédé selon la revendication 6, dans lequel la recommandation générée est un flux audio à partir duquel des dangers audio ont été filtrés.

8. Procédé selon la revendication 6, dans lequel lesdits un ou plusieurs capteurs sont sélectionnés parmi le groupe constitué de capteurs d'orientation, de capteurs de mouvement, de capteurs d'accélération, de capteurs de position, de capteurs d'utilisation de batterie, d'un capteur d'utilisation d'application, d'enregistrements d'appels et de capteurs de température.

9. Procédé selon la revendication 1, comprenant en outre l'étape consistant à modifier l'alerte sonore par défaut par la sélection d'une autre alerte sonore pour ledit utilisateur parmi lesdites une ou plusieurs premières ou secondes alertes sonores.

10. Procédé selon la revendication 1, dans lequel chaque alerte sonore parmi lesdites une ou plusieurs premières ou secondes alertes sonores est par ailleurs analysée en fonction de critères prédéterminés (209) pour vérifier qu'elle ne dépasse pas une durée prédéterminée, après quoi l'alerte sonore qui a satisfait lesdits critères est stockée dans la base de données (12).

11. Procédé selon la revendication 1, dans lequel lorsque l'utilisateur et l'un des utilisateurs de la liste d'utilisateurs associés sont à l'intérieur du voisinage prédéterminé l'un de l'autre, l'un d'entre eux recevra ou les deux d'entre eux recevront une alerte sonore pertinente de l'autre, même lorsqu'ils ne peuvent pas se voir mutuellement.

12. Procédé selon la revendication 1, dans lequel une pluralité d'alertes sonores pertinentes sont simultanément transmises à l'utilisateur.

13. Procédé selon la revendication 1, dans lequel les messages consultés sont des messages électroniques ou des messages de service de minimessages, SMS.
